# FASCICULE DE BREVET EUROPEEN

(11) **EP 4 704 385 B1**
(45) Date de publication et mention de la délivrance du brevet: **19.08.2026**
(21) Numéro de dépôt: 25197209.7
(22) Date de dépôt: 21.08.2025
(51) Int. Cl.: H04L 9/40, G01D 4/00, H04L 67/12, H04L 67/56, H04L 67/63, H04W 12/03, H04W 12/50, H04W 12/037, G06Q 50/06, H04Q 9/00

(54) **PROCÉDÉ D' APPAIRAGE DANS UN SYSTÈME DE GESTION AUTOMATISÉE DE COMPTEURS INTELLIGENTS**
PAARUNGSVERFAHREN IN EINEM AUTOMATISIERTEN INTELLIGENTEN ZÄHLERVERWALTUNGSSYSTEM
PAIRING METHOD IN AN AUTOMATED SMART METER MANAGEMENT SYSTEM

(30) Priorité: 27.08.2024 FR 2409156
(43) Date de publication de la demande: 04.03.2026
(73) Titulaire: Sagemcom Energy & Telecom SAS, 92270 Bois-Colombes (FR)
(72) Inventeur: TEBOULLE, Henri, 92270 BOIS-COLOMBES (FR); LECAPPON, Jean-Paul, 92270 BOIS-COLOMBES (FR)
(74) Mandataire: Cabinet Le Guen Maillet

(56) Documents cités:
- CN-A- 104 219 056
- CN-A- 112 989 416
- KR-B1- 101 308 578

## Description

### DOMAINE TECHNIQUE

Au moins un mode de réalisation concerne un procédé d'appairage dans un système de gestion automatisée de compteurs intelligents (« smart meters » en anglais), tels que des compteurs de consommation électrique, des compteurs de consommation d'eau, des compteurs de consommation de gaz, etc.

### ETAT DE LA TECHNIQUE ANTERIEURE

Il est connu des compteurs intelligents, de type compteurs d'énergie (compteurs électriques, compteurs de chaleur...) ou compteurs de fluides (compteurs de consommation de fluides : eau, gaz...), qui comprennent des interfaces de communication permettant à un système de gestion automatisée d'effectuer une collecte à distance de données de consommation. Des données de consommation peuvent ainsi être transmises, à intervalles réguliers ou sur demande, jusqu'à un système d'information IS (« Information System » en anglais) les traitant de manière centralisée.

Différents systèmes d'information IS peuvent partager une même infrastructure réseau, et chaque abonné peut souscrire des abonnements auprès de distributeurs (fournisseurs) différents qui peuvent gérer des compteurs intelligents de même type (*e.g.,* des compteurs d'eau intelligents) ou de types divers (*e.g.,* des compteurs d'eau intelligents et des compteurs de gaz intelligents). Or, lorsqu'un abonnement est souscrit, il peut être fastidieux d'appairer le compteur intelligent en question avec le bon système d'information IS apte à le gérer en fonction de l'abonnement souscrit.

Il est alors souhaitable de fournir une solution qui permette d'appairer de manière efficace et sécurisée les compteurs intelligents avec leurs systèmes d'information IS pertinents. Il est alors souhaitable de fournir une solution qui permette d'appairer ainsi des compteurs intelligents d'un immeuble ou d'un ensemble résidentiel avec leurs systèmes d'information IS pertinents, tout en limitant les coûts (et ressources) de déploiement.

Les documents CN 112 989 416 A (UNIV XIANGTAN) 18 juin 2021 (2021-06-18), KR 101 308 578 B1 (UNIV SOONCHUNHYANG IND ACAD COOP POUND [KR]) 13 septembre 2013 (2013-09-13) et CN 104 219 056 A (UNIV XIDIAN) 17 décembre 2014 (2014-12-17) font partie de l'état de l'art pertinent.

### EXPOSE DE L'INVENTION

A cet effet, il proposé un procédé d'appairage pour appairer un compteur intelligent, dit compteur intelligent orphelin, avec un système d'information, dit système d'information pertinent, qui est destiné à gérer à distance un sous-ensemble de compteurs intelligents qui sont inscrits auprès dudit système d'information pertinent, le procédé d'appairage étant exécuté par une passerelle multi-service dans un système de gestion automatisée comportant une pluralité de systèmes d'information candidats partageant une même infrastructure réseau pour gérer à distance des sous-ensembles respectifs de compteurs intelligents, le procédé comportant :
- recevoir une demande d'appairage en provenance du compteur intelligent orphelin, qui inclut une information de type de compteur intelligent, en clair, et une information d'identifiant de compteur intelligent qui est sous forme chiffrée grâce à une première clef symétrique K_DSO connue du compteur intelligent orphelin et du système d'information pertinent ;
- trouver, parmi les systèmes d'information candidats, ceux qui gèrent à distance des compteurs intelligents du même type que celui indiqué dans la demande d'appairage ;
- envoyer, grâce à un protocole sécurisé via l'infrastructure réseau, aux systèmes d'information candidats trouvés, une demande relayée d'appairage qui inclut ladite information d'identifiant de compteur intelligent sous forme chiffrée telle que présentée dans la demande d'appairage reçue ;
- recevoir, grâce au protocole sécurisé via l'infrastructure réseau, en réponse à la demande relayée d'appairage, un acquittement positif incluant une information d'identifiant du système d'information pertinent sous forme chiffrée grâce à ladite première clef symétrique K_DSO, une deuxième clef symétrique K_WM spécifique au compteur intelligent orphelin en clair et la même deuxième clef symétrique K_WM sous forme chiffrée grâce à une troisième clef symétrique MK_DSO connue du compteur intelligent orphelin et du système d'information pertinent ;
- transmettre au compteur intelligent orphelin un message d'acceptation d'appairage, qui inclut l'information d'identifiant du système d'information pertinent sous forme chiffrée et la deuxième clef symétrique K_WM sous forme chiffrée, telles que présentées dans l'acquittement positif reçu ; et
- agir comme intermédiaire entre le compteur intelligent orphelin alors appairé et le système d'information pertinent lors d'échanges ultérieurs, en utilisant la clef symétrique K_WM pour communiquer avec le compteur intelligent orphelin alors appairé.

Ainsi, grâce à l'information de type de compteur intelligent dans la demande d'appairage, la passerelle multi-service est capable de déterminer quels systèmes d'information solliciter parmi les systèmes d'information candidats. L'identifiant de compteur intelligent étant chiffré dans la demande d'appairage, cette information est protégée et un système d'information (ou tout autre dispositif) qui ne dispose pas de la clef symétrique K_DSO adéquate ne sera pas en mesure de le déchiffrer. Il en va de même pour l'information d'identifiant du système d'information pertinent lorsqu'elle est retournée par ledit système d'information pertinent. La clef symétrique K_WM, à utiliser ultérieurement entre la passerelle multi-service et le compteur intelligent orphelin, est quant à elle est protégée par le protocole sécurisé pour être communiquée à la passerelle multi-service et par la clef symétrique K_DSO adéquate pour être communiquée jusqu'au compteur intelligent orphelin. Cette clef symétrique K_WM ne peut donc pas non plus être capturée par un dispositif tiers. L'appairage est ainsi réalisé de manière efficace et sécurisée.

Dans un mode de réalisation particulier, le procédé d'appairage comporte :
- recevoir, en réponse au message d'acceptation d'appairage, un message de confirmation d'appairage, chiffré grâce à la deuxième clef symétrique K_WM, qui inclut l'information d'identifiant du système d'information pertinent.

Ainsi, lorsque l'appairage est confirmé par le compteur intelligent orphelin, l'information d'identifiant du système d'information pertinent, qui a été protégée par la clef symétrique K_DSO adéquate depuis le système d'information pertinent jusqu'au compteur intelligent orphelin est communiquée de manière sécurisée, grâce à la clef symétrique K_WM désormais connue de la passerelle multi-service et du compteur intelligent orphelin, à la passerelle multi-service.

Il est également proposé ici un autre procédé d'appairage (en correspondance avec le procédé d'appairage exposé ci-dessus) pour appairer un compteur intelligent, dit compteur intelligent orphelin, avec un système d'information, dit système d'information pertinent, qui est destiné à gérer à distance un sous-ensemble de compteurs intelligents qui sont inscrits auprès dudit système d'information pertinent, le procédé d'appairage étant exécuté par le compteur intelligent orphelin dans un système de gestion automatisée comportant une pluralité de systèmes d'information candidats partageant une même infrastructure réseau pour gérer à distance des sous-ensembles respectifs de compteurs intelligents, le procédé comportant :
- transmettre, à une passerelle multi-service destinée à agir comme relais entre le compteur intelligent orphelin et le système d'information pertinent, une demande d'appairage qui inclut une information de type de compteur intelligent, en clair, et une information d'identifiant de compteur intelligent qui est sous forme chiffrée grâce à une première clef symétrique K_DSO connue du compteur intelligent orphelin et du système d'information pertinent ;
- recevoir, de la passerelle multi-service, un message d'acceptation d'appairage, qui inclut l'information d'identifiant du système d'information pertinent sous forme chiffrée grâce à la première clef symétrique K_DSO, ainsi qu'une deuxième clef symétrique K_WM sous forme chiffrée grâce à une troisième clef symétrique MK_DSO connue du compteur intelligent orphelin et du système d'information pertinent ; et
- utiliser la passerelle multi-service comme intermédiaire entre le compteur intelligent orphelin alors appairé et le système d'information pertinent lors d'échanges ultérieurs, en utilisant la clef symétrique K_WM pour communiquer avec la passerelle multi-service et la première clef symétrique K_DSO pour communiquer avec le système d'information pertinent.

Dans un mode de réalisation particulier, cet autre procédé d'appairage comporte :
- transmettre, en réponse au message d'acceptation d'appairage, un message de confirmation d'appairage, chiffré grâce à la deuxième clef symétrique K_WM, qui inclut l'information d'identifiant du système d'information pertinent.

Dans un mode de réalisation particulier, les procédés d'appairage exposés ci-dessus dans l'un quelconque de leurs modes de réalisation sont tels que le type de compteur intelligent est parmi un ensemble prédéfini de types candidats de compteurs intelligents incluant : compteur d'électricité, compteur d'eau, et compteur de gaz.

Ainsi, les procédés d'appairage exposés ci-dessus dans l'un quelconque de leurs modes de réalisation sont facilement applicables à divers types de comptage de consommation en bénéficiant d'une même infrastructure réseau pour leur gestion automatisée à distance.

Il est également proposé ici un produit programme d'ordinateur comportant des instructions pour exécuter l'un ou l'autre des procédés d'appairage exposés ci-dessus dans l'un quelconque de leurs modes de réalisation, lorsque les instructions sont exécutées par un processeur. Il est également proposé ici un support de stockage d'informations stockant des instructions pour exécuter l'un ou l'autre des procédés d'appairage exposés ci-dessus, lorsque les instructions sont lues depuis le support de stockage d'informations et exécutées par un processeur.

Il est également proposé ici une passerelle multi-service configurée pour appairer un compteur intelligent, dit compteur intelligent orphelin, avec un système d'information, dit système d'information pertinent, qui est destiné à gérer à distance un sous-ensemble de compteurs intelligents qui sont inscrits auprès dudit système d'information pertinent, la passerelle multi-service étant destinée à être utilisée dans un système de gestion automatisée comportant une pluralité de systèmes d'information candidats partageant une même infrastructure réseau pour gérer à distance des sous-ensembles respectifs de compteurs intelligents, la passerelle multi-service comportant de la circuiterie électronique configurée pour :
- recevoir une demande d'appairage en provenance du compteur intelligent orphelin, qui inclut une information de type de compteur intelligent, en clair, et une information d'identifiant de compteur intelligent qui est sous forme chiffrée grâce à une première clef symétrique K_DSO connue du compteur intelligent orphelin et du système d'information pertinent ;
- trouver, parmi les systèmes d'information candidats, ceux qui gèrent à distance des compteurs intelligents du même type que celui indiqué dans la demande d'appairage ;
- envoyer, grâce à un protocole sécurisé via l'infrastructure réseau, aux systèmes d'information candidats trouvés, une demande relayée d'appairage qui inclut ladite information d'identifiant de compteur intelligent sous forme chiffrée telle que présentée dans la demande d'appairage reçue ;
- recevoir, grâce au protocole sécurisé via l'infrastructure réseau, en réponse à la demande relayée d'appairage, un acquittement positif incluant une information d'identifiant du système d'information pertinent sous forme chiffrée grâce à ladite première clef symétrique K_DSO, une deuxième clef symétrique K_WM spécifique au compteur intelligent orphelin en clair et la même deuxième clef symétrique K_WM sous forme chiffrée grâce à une troisième clef symétrique MK_DSO connue du compteur intelligent orphelin et du système d'information pertinent ;
- transmettre au compteur intelligent orphelin un message d'acceptation d'appairage, qui inclut l'information d'identifiant du système d'information pertinent sous forme chiffrée et la deuxième clef symétrique K_WM sous forme chiffrée, telles que présentées dans l'acquittement positif reçu ; et
- agir comme intermédiaire entre le compteur intelligent orphelin alors appairé et le système d'information pertinent lors d'échanges ultérieurs, en utilisant la clef symétrique K_WM pour communiquer avec le compteur intelligent orphelin alors appairé.

Il est également proposé ici un compteur intelligent configuré pour appairer ledit compteur intelligent, dit compteur intelligent orphelin, avec un système d'information, dit système d'information pertinent, qui est destiné à gérer à distance un sous-ensemble de compteurs intelligents qui sont inscrits auprès dudit système d'information pertinent, le compteur intelligent orphelin étant destiné à être utilisé dans un système de gestion automatisée comportant une pluralité de systèmes d'information candidats partageant une même infrastructure réseau pour gérer à distance des sous-ensembles respectifs de compteurs intelligents, le compteur intelligent orphelin comportant de la circuiterie électronique configurée pour :
- transmettre, à une passerelle multi-service destinée à agir comme relais entre le compteur intelligent orphelin et le système d'information pertinent, une demande d'appairage qui inclut une information de type de compteur intelligent, en clair, et une information d'identifiant de compteur intelligent qui est sous forme chiffrée grâce à une première clef symétrique K_DSO connue du compteur intelligent orphelin et du système d'information pertinent ;
- recevoir, de la passerelle multi-service, un message d'acceptation d'appairage, qui inclut l'information d'identifiant du système d'information pertinent sous forme chiffrée grâce à la première clef symétrique K_DSO, ainsi qu'une deuxième clef symétrique K_WM sous forme chiffrée grâce à une troisième clef symétrique MK_DSO connue du compteur intelligent orphelin et du système d'information pertinent ; et
- utiliser la passerelle multi-service comme intermédiaire entre le compteur intelligent orphelin alors appairé et le système d'information pertinent lors d'échanges ultérieurs, en utilisant la clef symétrique K_WM pour communiquer avec la passerelle multi-service et la première clef symétrique K_DSO pour communiquer avec le système d'information pertinent.

Il est également proposé ici un système multi-service comportant une passerelle multi-service, telle qu'exposée ci-dessus, et une pluralité de compteurs intelligents, tels qu'exposés ci-dessus, répartis en sous-groupes qui correspondent chacun à des installations d'un même abonné.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de gestion automatisée de compteurs intelligents dans lequel la présente invention peut être implémentée ;
[Fig. 2] illustre schématiquement un agencement d'un système de regroupement de compteurs intelligents du système de gestion automatisée de compteurs intelligents ;
[Fig. 3] illustre schématiquement un exemple d'architecture matérielle de dispositif du système de gestion automatisée ; et
[Fig. 4] illustre schématiquement des échanges intervenant dans le système de gestion automatisée pour réaliser un appairage entre un compteur intelligent et un système d'information qui lui correspond, pour permettre au système d'information en question de collecter des données de consommation auprès du compteur intelligent en question.

### EXPOSE DETAILLE DE MODES DE REALISATION

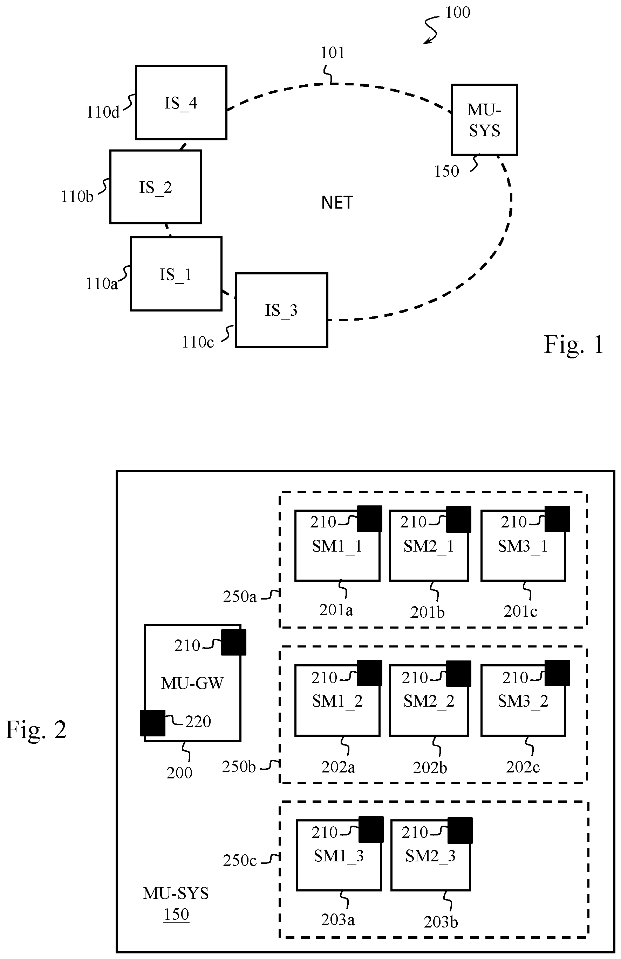

La **Fig. 1** illustre schématiquement un système de gestion automatisée 100 dans lequel la présente invention peut être implémentée. Le système de gestion automatisée 100 est configuré pour réaliser une collecte de données de consommation issues de mesures effectuées par un ensemble de compteurs intelligents.

Les données de consommation collectées sont traitées par plusieurs systèmes d'information IS (« Information System » en anglais) qui partagent une même infrastructure réseau NET 101 afin de gérer à distance des sous-ensembles de compteurs intelligents respectifs.

D'une manière générale, le système de gestion automatisée 100 comporte une quantité N de systèmes d'information IS. De manière illustrative, la Fig. 1 présente quatre systèmes d'information IS.

Chaque système d'information IS est un équipement gestionnaire centralisé dédié à un dit sous-ensemble de compteurs intelligents du système de gestion automatisée 100, qui sont inscrits auprès du système d'information IS en question, selon des abonnements souscrits par des utilisateurs (appelé « abonnés ») respectifs auprès d'un distributeur pour lequel ledit système d'information IS opère. Par exemple, un premier système d'information IS_1 110a est dédié au traitement de données de consommation de compteurs électriques intelligents pour le compte d'un distributeur d'électricité A, un deuxième système d'information IS2 110b est dédié au traitement de données de consommation de compteurs d'eau intelligents pour le compte d'un premier distributeur d'eau B, un troisième système d'information IS3 110c est dédié au traitement de données de consommation de compteurs de gaz intelligents pour le compte d'un distributeur de gaz C, et un quatrième système d'information IS4 110d est dédié au traitement de données de consommation de compteurs d'eau intelligents pour le compte d'un deuxième distributeur d'eau D.

Par exemple, chaque système d'information IS comprend diverses composantes dont un système de tête de réseau HES (« Head-End System » en anglais), un système de gestion de données de compteurs MDMS (« Meter Data Management System » en anglais), et un système de gestion de clefs KMS (« Key Management System » en anglais). Le système de tête de réseau HES est configuré pour effectuer la gestion de transmissions dans le cadre de la collecte de données de consommation. Le système de gestion de données de compteurs MDMS est configuré pour traiter les données de consommation collectées. Le système de gestion de clefs KMS est configuré pour stocker des clefs de chiffrement nécessaires au système de gestion de données de compteurs MDMS et aux compteurs intelligents qui dépendent du système d'information IS en question, ainsi que tout équipement intermédiaire entre le système d'information IS en question et les compteurs intelligents en question. Les composantes de système d'information IS communiquent par exemple en utilisant l'Internet, ou plus généralement un réseau de type IP (« Internet Protocol » en anglais), ou en utilisant potentiellement un réseau privé virtuel VPN (« Virtual Private Network » en anglais).

Le système de gestion automatisée 100 permet de gérer des installations, telles que des immeubles ou des ensembles résidentiels, où différents compteurs intelligents sont colocalisés. On parle de systèmes multi-services MU-SYS 150 (« Multi-Utility System » en anglais). Les compteurs intelligents de ces systèmes multi-services MU-SYS 150 peuvent être des compteurs intelligents de différentes natures *(i.e.,* sont adaptés au comptage de consommation d'énergies ou de fluides distincts) Les compteurs intelligents de ces systèmes multi-services MU-SYS 150 peuvent être des compteurs intelligents de même nature mais pour le compte de distributeurs différents (e.g., des compteurs d'eau intelligents pour le compte du premier distributeur d'eau B susmentionné et d'autres compteurs d'eau intelligents pour le compte du deuxième distributeur d'eau D susmentionné).

La Fig. 2 illustre schématiquement un agencement de système multi-service MU-SYS 150. Le système multi-service MU-SYS 150 est un système de regroupement de compteurs intelligents du système de gestion automatisée 100, typiquement au sein d'un immeuble ou d'un ensemble résidentiel.

Le système multi-service MU-SYS 150 comporte une passerelle multi-service MU-GW 200 permettant de gérer ce regroupement de compteurs intelligents, et donc de servir d'intermédiaire entre les systèmes d'information IS_1 110a, IS_2 110b, IS_3 110c et IS_4 110d, d'un côté, et les compteurs intelligents du regroupement, d'un autre côté.

De manière illustrative, le système multi-service MU-SYS 150 comporte sur la Fig. 2 un regroupement de huit compteurs intelligents. Ces huit compteurs intelligents sont en pratique répartis en trois sous-groupes 250a, 250b, 250c qui correspondent chacun à des installations (e.g., locaux) d'un même abonné. Cette répartition en sous-groupes 250a, 250b, 250c n'est pas nécessairement connue, ni utile, du point de vue de la passerelle multi-service MU-GW 200, ni du système de gestion automatisée 100 d'une manière plus générale.

Ainsi, par exemple, le premier sous-groupe 250a comporte un compteur électrique intelligent SM1_1 201a d'un premier abonné, un compteur d'eau intelligent SM2_1 201b du premier abonné et un compteur de gaz intelligent SM3_1 201c du premier abonné. Le deuxième sous-groupe 250b comporte, quant à lui, un compteur électrique intelligent SM1_2 202a d'un deuxième abonné, un compteur d'eau intelligent SM2_2 202b du deuxième abonné et un compteur de gaz intelligent SM3_2 202c du deuxième abonné.

Enfin, le troisième sous-groupe 250c comporte un compteur électrique intelligent SM3_2 203a d'un troisième abonné et un compteur d'eau intelligent SM2_3 203b du troisième abonné (pas de compteur de gaz pour ce troisième abonné).

La présence de la passerelle multi-service MU-GW 200 permet d'équiper les compteurs intelligents du regroupement de moyens de communication à courte portée plutôt que de devoir les équiper de moyens de communication à longue portée pour communiquer avec les systèmes d'information IS_1 110a, IS_2 110b, IS_3 110c et IS_4 110d. La passerelle multi-service MU-GW 200 permet ainsi de réduire la complexité et le coût de fabrication des compteurs intelligents, puisque les technologies de communication à courte portée sont typiquement moins complexes et onéreuses que celles à longue portée.

Ainsi, les compteurs intelligents du regroupement sont munis d'une interface de communication à courte portée 210. Par exemple, l'interface de communication à courte portée 210 est adaptée pour établir un lien de communication conforme aux spécifications de télérelève M-Bus (« Meter Bus » en anglais), telles que définies dans la norme EN 13757-2, ou aux spécifications wM-Bus (« Wireless M-Bus » en anglais), telles que définies dans la norme EN 13757-4, avec la passerelle multi-service MU-GW 200 (qui dispose aussi d'une telle interface de communication à courte portée 210). D'autres technologies de communication à courte portée peuvent être utilisées, telles que Wi-Fi, Bluetooth, Zigbee, KNX, KNX-RF...

En outre, la passerelle multi-service MU-GW 200 dispose aussi d'une interface de communication longue portée 220 pour communiquer avec les systèmes d'information IS_1 110a, IS_2 110b, IS_3 110c et IS_4 110d au travers du réseau de communication NET 101.

Par exemple, le réseau de communication NET 101 est un réseau de communication sans-fil de type 5G (5^{e} Génération). Selon d'autres exemples, le réseau de communication NET 101 est un réseau de communication sans-fil de type GPRS (« General Packet Radio Service » en anglais), UMTS (« Universal Mobile Telecommunication System » en anglais), LTE-MTC (« Long-Term Evolution Machine Type Communication » en anglais) aussi connu sous le diminutif LTE-M, ou NB-IoT (« NarrowBand Internet of Things » en anglais).

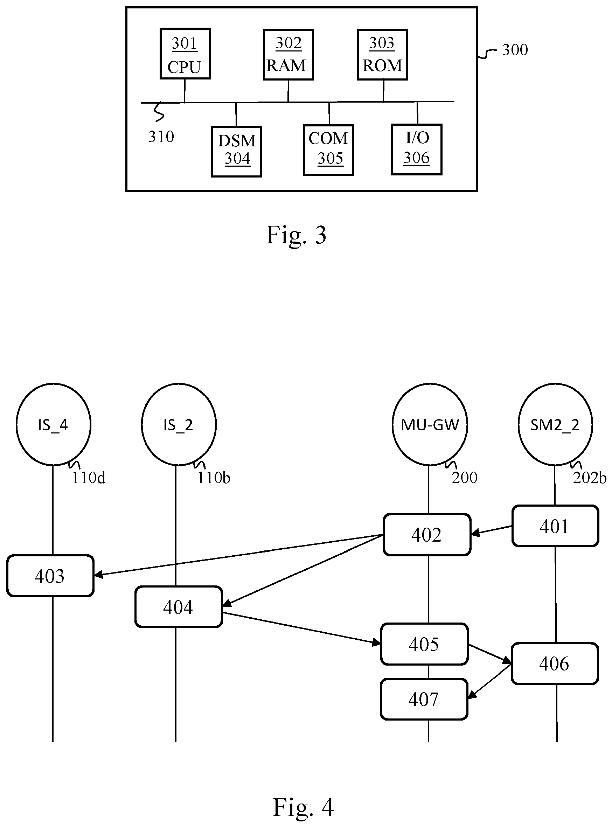

La Fig. 3 illustre schématiquement un exemple d'architecture matérielle 300, qui est adapté pour implémenter tout contrôleur de dispositif du système de gestion automatisée 100. L'exemple d'architecture matérielle est ainsi adapté pour implémenter un contrôleur de système d'information IS, ou de toute composante du système d'information IS. L'exemple d'architecture matérielle est aussi adapté pour implémenter un contrôleur de compteur intelligent. L'exemple d'architecture matérielle est aussi adapté pour implémenter un contrôleur de passerelle multi-service MU-GW 200.

L'architecture matérielle 300 comprend alors, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, ou EEPROM (« Electrically Erasable Programmable ROM » en anglais), ou une mémoire de type Flash ; un support de stockage de données DSM (« Data Storage Medium » en anglais) 304, tel qu'un disque dur HDD (« Hard Disk Drive » en anglais), ou un lecteur de support de stockage, tel qu'un lecteur de cartes SD (« Secure Digital » en anglais) ; et au moins une interface de communication COM 305. Selon le dispositif considéré, l'architecture matérielle 300 peut en outre comprendre des entrées/sorties (« Inputs / Outputs en anglais) I/O 306, par exemple pour effectuer des mesures de consommation.

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication. Lorsque l'architecture matérielle 300 est mise sous tension, le processeur 301 est capable de lire de la RAM 302 des instructions et de les exécuter. Ces instructions forment un programme d'ordinateur causant la mise en œuvre, par le processeur 301, des étapes et algorithmes décrits ici en relation avec le dispositif ou équipement concerné.

Tout ou partie des étapes et algorithmes décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) ou un ensemble de composants (« chipset » en anglais), tel qu'un FPGA (« Field-Programmable Gate Array » en anglais) ou un ASIC (« Application-Specific Integrated Circuit » en anglais). D'une manière générale, chaque dispositif ou équipement du système de gestion automatisée 100 comprend de la circuiterie électronique agencée et configurée pour implémenter les étapes et algorithmes décrits ici en relation avec le dispositif ou équipement en question.

La Fig. 4 illustre schématiquement des échanges intervenant dans le système de gestion automatisée 100 pour appairer un compteur intelligent, dit compteur intelligent orphelin (c'est-à-dire qui n'est pas encore appairé avec un système d'information IS du) avec le système d'information IS du distributeur auprès duquel l'abonnement dudit compteur intelligent a été souscrit, dit système d'information pertinent.

Considérons par la suite, par exemple, que l'appairage concerne le compteur d'eau intelligent SM2_1 201b (compteur intelligent orphelin).

Dans une étape 401, le compteur d'eau intelligent SM2_1 201b déclenche une demande d'appairage, ce qui entraîne l'émission par le compteur d'eau intelligent SM2_1 201b vers la passerelle multi-service MU-GW 200 d'une requête d'appairage.

Il est important de noter que le compteur d'eau intelligent SM2_1 201b ne connaît pas le système d'information IS auquel ledit compteur d'eau intelligent SM2_1 201b doit être rattaché.

Dans un mode de réalisation particulier, le compteur d'eau intelligent SM2_1 201b dispose d'un bouton, par exemple en face avant, sur lequel appuyer (e.g., appui long d'une durée supérieure à 2 secondes) pour déclencher une demande d'appairage. Le déclenchement de la demande d'appairage peut en variante être réalisé par la sélection d'un élément dans un menu déroulant d'une interface homme-machine du compteur d'eau intelligent SM2_1 201b. Le déclenchement de la demande d'appairage peut encore en variante être réalisé par réception d'un message ou d'une instruction externe, par exemple en provenance de la passerelle multi-service MU-GW 200.

La requête d'appairage est un message qui inclut :
- une information de type de message (en clair), qui identifie que le message est une requête d'appairage ;
- une information de type de compteur intelligent (en clair), qui identifie de quel type de comptage de consommation est le compteur intelligent qui transmet la requête d'appairage parmi un ensemble prédéfini de plusieurs types candidats de compteur intelligent ;
- une information d'identifiant de compteur intelligent, sous forme chiffrée, qui identifie le compteur intelligent en question, cet identifiant étant connu du système d'information IS dont dépend le compteur intelligent en question (ici le compteur d'eau intelligent SM2_1 201b).

L'information d'identifiant de compteur intelligent est par exemple un numéro de série du compteur intelligent en question ou une information dérivée dudit numéro de série.

L'information d'identifiant de compteur intelligent est préférentiellement chiffrée grâce à une clef symétrique K_DSO, qui est spécifique au système d'information IS dont dépend le compteur intelligent en question et qui est connue du compteur intelligent en question.

La clef symétrique K_DSO est par exemple configurée, en mémoire du compteur intelligent en question, lors de l'installation du compteur intelligent en question et de la prise d'abonnement auprès du distributeur concerné. Par la suite, la clef symétrique K_DSO spécifique à un système d'information IS_N (avec *N =* 1,..,4 sur la Fig. 1) est dénommée K_DSO[N].

Dans un mode de réalisation particulier, le compteur intelligent en question dispose d'une autre clef symétrique MK_DSO, spécifique au système d'information IS dont dépend le compteur intelligent en question. Cette clef symétrique MK_DSO est appelée clef maître (« master key » en anglais) et est utilisée pour chiffrer d'autres clefs. Par la suite, la clef maître MK_DSO spécifique à un système d'information IS_*N*(avec *N =* 1,..,4 sur la Fig. 1) est dénommée MK_DSO[N].

Contrairement à l'information d'identifiant de compteur intelligent qui est présente sous forme chiffrée dans la requête d'appairage, l'information de type de compteur intelligent y est présente en clair. L'information de type de compteur intelligent peut ainsi être capturée et utilisée par la passerelle multi-service MU-GW 200.

Dans le cas du compteur d'eau intelligent SM2_1 201b, le type de compteur intelligent est « compteur d'eau ». Et l'ensemble prédéfini de types candidats de compteurs intelligents est par exemple : compteur d'électricité, compteur d'eau, et compteur de gaz. L'ensemble prédéfini de types candidats de compteurs intelligents peut inclure aussi : compteur de chaleur. 2 bits suffisent ainsi à coder l'ensemble prédéfini de types candidats de compteurs intelligents. Un nombre différent de bits peut être spécifié, en fonction du nombre de types candidats de compteurs intelligents à autoriser dans le système de gestion automatisée 100.

Dans une étape 402, la passerelle multi-service MU-GW 200 reçoit la requête d'appairage transmise par le compteur d'eau intelligent SM2_1 201b à l'étape 401. La passerelle multi-service MU-GW 200 dispose de plusieurs systèmes d'information candidats pour l'appairage, à savoir les systèmes d'information IS_1 110a, IS_2 110b, IS_3 110c, IS4 110d. De manière à réduire la recherche des systèmes d'information IS à solliciter, la passerelle multi-service MU-GW 200 lit l'information de type de compteur intelligent incluse dans la requête d'appairage. La passerelle multi-service MU-GW 200 identifie alors quels sont les systèmes d'information IS qui sont destinés à gérer des compteurs intelligents qui sont du type indiqué dans la requête d'appairage.

Préalablement à l'installation sur site de la passerelle multi-services MU-GW 200, les informations relatives aux systèmes d'information IS *(e.g.,* de distribution d'électricité, de distribution d'eau et de distribution de gaz) auxquels les compteurs chez les abonnés derrière la passerelle multi-service MU-GW 200 sont susceptibles d'être appairés sont programmées dans ladite passerelle multi-service MU-GW 200 (en usine, chez l'installateur ou sur site, typiquement).

La passerelle multi-service MU-GW 200 transmet alors à chacun de ces systèmes d'information IS, qui ont été trouvés comme gérant des compteurs intelligents qui sont du type indiqué dans la requête d'appairage (e.g., compteurs d'eau intelligents), une requête relayée d'appairage. Ladite requête relayée d'appairage reprend au minimum l'information d'identifiant de compteur intelligent telle qu'elle était présentée dans la requête d'appairage transmise par le compteur d'eau intelligent SM2_1 201b *(i.e.,* sous forme chiffrée).

A noter qu'à ce stade les échanges entre le compteur d'eau intelligent SM2_1 201b et la passerelle multi-service MU-GW 200 ne sont pas chiffrés. Comme expliqué plus loin, les échanges entre chaque compteur intelligent du système multi-service MU-SYS 150 et la passerelle multi-service MU-GW 200 pourront ultérieurement, dans un mode de réalisation particulier, être chiffrés à l'aide d'une clef symétrique K_WM, spécifique au compteur intelligent en question. Par la suite, la clef symétrique K_WM spécifique à un compteur intelligent SM*X*_Y (avec *X=* 1,..,3 et *Y=* 1,..,3 sur la Fig. 2) est dénommée K_WM[*X_*Y].

Les échanges entre la passerelle multi-service MU-GW 200 et chacun des systèmes d'information IS du système de gestion automatisée 100 sont réalisés grâce à un protocole sécurisé, de manière à assurer au moins la confidentialité des données échangées, par exemple grâce au protocole TLS (« Transport Layer Security » en anglais).

Le compteur d'eau intelligent SM2_1 201b étant de type « compteur d'eau », la passerelle multi-service MU-GW 200 génère une requête relayée d'appairage à l'attention du système d'information IS_2 110b et du système d'information IS_4 110d. Une transmission point-multipoint (« multicast » en anglais) peut en variante être utilisée.

Considérons, à titre illustratif, que le compteur d'eau intelligent SM2_1 201b est supposé être géré par le système d'information IS_2 110b (et non par le système d'information IS_4 110d).

Alors, dans une étape 403, le système d'information IS_4 110d déchiffre, dans la requête relayée d'appairage qui lui a été transmise, l'information d'identifiant de compteur intelligent. Et après déchiffrement grâce à la clef symétrique K_DSO[4], le système d'information IS_4 110d ne reconnait pas l'information d'identifiant de compteur intelligent comme correspondant à un identifiant de compteur intelligent qui doit lui être rattaché. En effet, chaque système d'information IS du système de gestion automatisée 100 détient une liste de tous les identifiants de compteurs intelligents dont ledit système d'information IS est supposé avoir la gestion *(i.e.,* selon les abonnements souscrits auprès du distributeur concerné). Alors, le système d'information IS_4 110d n'envoie pas de réponse à la passerelle multi-service MU-GW 200 ou envoie un acquittement négatif à la requête relayée d'appairage qui lui a été transmise par la passerelle multi-service MU-GW 200.

Et, dans une étape 404, le système d'information IS_2 110b déchiffre, dans la requête relayée d'appairage qui lui a été transmise, l'information d'identifiant de compteur intelligent. Et après déchiffrement grâce à la clef symétrique K_DSO[2], le système d'information IS_2 110b reconnait l'information d'identifiant de compteur intelligent comme correspondant à un identifiant de compteur intelligent qui doit lui être rattaché *(i.e.,* abonnement souscrit auprès du distributeur concerné). Alors, le système d'information IS_2 110b répond à la passerelle multi-service MU-GW 200 par un acquittement positif à la requête relayée d'appairage qui lui a été transmise par la passerelle multi-service MU-GW 200.

L'acquittement positif est un message qui inclut :
- une information de type de message (en clair), qui identifie que le message est un acquittement positif à une requête d'appairage ;
- une information d'identifiant du système d'information IS_2 110b *(i.e.,* l'identifiant du système d'information IS qui prend en charge le compteur intelligent pour lequel l'appairage a été demandé), sous forme chiffrée grâce à la clef symétrique K_DSO[2] ;
- la clef symétrique K_WM[*2*_*1*], spécifique au compteur d'eau intelligent SM2_1 201b, en clair ; et
- la même clef symétrique K_WM[*2*_*1*], chiffrée à l'aide de la clef maître MK_DSO[*2*].

D'autre informations, à destination du compteur d'eau intelligent 201b, peuvent être incluses sous forme chiffrée grâce à la clef symétrique K_DSO[2] dans l'acquittement positif, comme par exemple des informations de configuration à appliquer par le compteur d'eau intelligent 201b.

Comme le reste des échanges entre la passerelle multi-service MU-GW 200 et le système d'information IS_2 110b, l'acquittement positif est transmis grâce à un protocole sécurisé, par exemple grâce au protocole TLS.

Dans une étape 405, la passerelle multi-service MU-GW 200 lit et mémorise la clef symétrique K_WM[*2*_*1*] fournie en clair (au-delà du chiffrement, par exemple grâce au protocole TLS, appliqué dans les échanges entre la passerelle multi-service MU-GW 200 et le système d'information IS_2 110b) dans l'acquittement positif transmis par le système d'information IS_2 110b.

Ensuite, la passerelle multi-service MU-GW 200 génère un message d'acceptation d'appairage à destination du compteur d'eau intelligent SM2_1 201b incluant l'information d'identifiant du système d'information IS_2 110b, sous forme chiffrée grâce à la clef symétrique K_DSO[2], ainsi que la clef symétrique K_WM[2_1], chiffrée à l'aide de la clef maître MK_DSO[*2*] *(i.e.,* telles qu'elles sont présentées dans le message d'acquittement positif transmis par le système d'information IS_2 110b).

Une fois le message d'acceptation d'appairage reçu, dans une étape 406, le compteur d'eau intelligent SM2_1 201b peut déchiffrer la clef symétrique K_WM[*2*_*1*] grâce à la clef maître MK_DSO[*2*], ce qui permet de chiffrer ultérieurement les échanges entre le compteur d'eau intelligent SM2_1 201b et la passerelle multi-service MU-GW 200. Le compteur d'eau intelligent SM2_1 201b peut aussi déchiffrer l'information d'identifiant du système d'information IS_2 110b, grâce à la clef symétrique K_DSO[2]. Le compteur d'eau intelligent SM2_1 201b est alors appairé avec le système d'information IS_2 110b.

Puis, le compteur d'eau intelligent SM2_1 201b transmet à la passerelle multi-service MU-GW 200 un message de confirmation d'appairage, chiffré grâce à la clef symétrique K_WM[*2*_*1*], dans lequel le compteur d'eau intelligent SM2_1 201b transmet l'information d'identifiant du système d'information IS_2 110b.

Alors, dans une étape 407, la passerelle multi-service MU-GW 200 mémorise l'information d'identifiant du système d'information IS_2 110b en association avec un descripteur associé au compteur d'eau intelligent SM2_1 201b, notant ainsi que le compteur d'eau intelligent SM2_1 201b est rattaché et appairé avec le système d'information IS_2 110b.

Par la suite, à chaque fois qu'un message provient du compteur d'eau intelligent SM2_1 201b, la passerelle multi-service MU-GW 200 sait à quel système d'information IS s'adresser. La passerelle multi-service MU-GW 200 agit alors comme intermédiaire entre le compteur d'eau intelligent SM2_1 201b (compteur intelligent orphelin alors appairé) et le système d'information IS_2 110b (système d'information pertinent) lors d'échanges ultérieurs pour permettre, entre autres opérations, au système d'information IS_2 110b de collecter des données de consommation établies par le compteur d'eau intelligent SM2_1 201b.

Les informations échangées entre le compteur d'eau intelligent SM2_1 201b et le système d'information IS_2 110b (par exemple, relevé de comptage) sont chiffrées de bout en bout avec la clé K_DSO[2]. Les échanges entre le compteur d'eau intelligent SM2_1 201b et le système d'information IS_2 110b peuvent par exemple s'appuyer sur le protocole DLMS / COSEM (« Device Language Message Specification » / « Companion Specification for Energy Metering » en anglais) ou LwM2M (« Lightweight Machine to Machine » en anglais).

La passerelle multi-service MU-GW 200 n'a donc pas accès à ces informations échangées entre le compteur d'eau intelligent SM2_1 201b et le système d'information IS_2 110b. Et les messages échangés entre la passerelle multi-service MU-GW 200 et le compteur d'eau intelligent SM2_1 201b sont chiffrés avec la clef symétrique K_WM[2_1], afin d'assurer la protection de leurs contenus.

## Revendications

1. Procédé d'appairage pour appairer un compteur intelligent, dit compteur intelligent orphelin (201b), avec un système d'information, dit système d'information pertinent (110b), qui est destiné à gérer à distance un sous-ensemble de compteurs intelligents qui sont inscrits auprès dudit système d'information pertinent, le procédé d'appairage étant exécuté par une passerelle multi-service (200) dans un système de gestion automatisée (100) comportant une pluralité de systèmes d'information candidats (110a, 110b, 110c, 110d) partageant une même infrastructure réseau (101) pour gérer à distance des sous-ensembles respectifs de compteurs intelligents (201a, 201b, 201c, 202a, 202b, 202c, 203a, 203b), le procédé comportant :
- recevoir une demande d'appairage en provenance du compteur intelligent orphelin, qui inclut une information de type de compteur intelligent, en clair, et une information d'identifiant de compteur intelligent qui est sous forme chiffrée grâce à une première clef symétrique K_DSO connue du compteur intelligent orphelin (201b) et du système d'information pertinent (110b) ;
- trouver, parmi les systèmes d'information candidats (110a, 110b, 110c, 110d), ceux qui gèrent à distance des compteurs intelligents du même type que celui indiqué dans la demande d'appairage ;
- envoyer, grâce à un protocole sécurisé via l'infrastructure réseau (101), aux systèmes d'information candidats trouvés (110b, 110d), une demande relayée d'appairage qui inclut ladite information d'identifiant de compteur intelligent sous forme chiffrée telle que présentée dans la demande d'appairage reçue ;
- recevoir, grâce au protocole sécurisé via l'infrastructure réseau (101), en réponse à la demande relayée d'appairage, un acquittement positif incluant une information d'identifiant du système d'information pertinent sous forme chiffrée grâce à ladite première clef symétrique K_DSO, une deuxième clef symétrique K_WM spécifique au compteur intelligent orphelin (201b) en clair et la même deuxième clef symétrique K_WM sous forme chiffrée grâce à une troisième clef symétrique MK_DSO connue du compteur intelligent orphelin (210b) et du système d'information pertinent (110b) ;
- transmettre au compteur intelligent orphelin (201b) un message d'acceptation d'appairage, qui inclut l'information d'identifiant du système d'information pertinent (110b) sous forme chiffrée et la deuxième clef symétrique K_WM sous forme chiffrée, telles que présentées dans l'acquittement positif reçu ; et
- agir comme intermédiaire entre le compteur intelligent orphelin (201b) alors appairé et le système d'information pertinent (110b) lors d'échanges ultérieurs, en utilisant la clef symétrique K_WM pour communiquer avec le compteur intelligent orphelin (201b) alors appairé.

2. Procédé d'appairage selon la revendication 1, comportant :
- recevoir, en réponse au message d'acceptation d'appairage, un message de confirmation d'appairage, chiffré grâce à la deuxième clef symétrique K_WM, qui inclut l'information d'identifiant du système d'information pertinent.

3. Procédé d'appairage pour appairer un compteur intelligent, dit compteur intelligent orphelin (201b), avec un système d'information, dit système d'information pertinent (110b), qui est destiné à gérer à distance un sous-ensemble de compteurs intelligents qui sont inscrits auprès dudit système d'information pertinent (110b), le procédé d'appairage étant exécuté par le compteur intelligent orphelin (201b) dans un système de gestion automatisée (100) comportant une pluralité de systèmes d'information candidats (110a, 110b, 110c, 110d) partageant une même infrastructure réseau (101) pour gérer à distance des sous-ensembles respectifs de compteurs intelligents (201a, 201b, 201c, 202a, 202b, 202c, 203a, 203b), le procédé comportant :
- transmettre, à une passerelle multi-service (200) destinée à agir comme relais entre le compteur intelligent orphelin (201b) et le système d'information pertinent (110b), une demande d'appairage qui inclut une information de type de compteur intelligent, en clair, et une information d'identifiant de compteur intelligent qui est sous forme chiffrée grâce à une première clef symétrique K_DSO connue du compteur intelligent orphelin (201b) et du système d'information pertinent (110b) ;
- recevoir, de la passerelle multi-service (200), un message d'acceptation d'appairage, qui inclut l'information d'identifiant du système d'information pertinent sous forme chiffrée grâce à la première clef symétrique K_DSO, ainsi qu'une deuxième clef symétrique K_WM spécifique au compteur intelligent orphelin (201b) sous forme chiffrée grâce à une troisième clef symétrique MK_DSO connue du compteur intelligent orphelin (201b) et du système d'information pertinent (110b) ; et
- utiliser la passerelle multi-service comme intermédiaire entre le compteur intelligent orphelin alors appairé et le système d'information pertinent lors d'échanges ultérieurs, en utilisant la clef symétrique K_WM pour communiquer avec la passerelle multi-service et la première clef symétrique K_DSO pour communiquer avec le système d'information pertinent (110b).

4. Procédé d'appairage selon la revendication 3, comportant :
- transmettre, en réponse au message d'acceptation d'appairage, un message de confirmation d'appairage, chiffré grâce à la deuxième clef symétrique K_WM, qui inclut l'information d'identifiant du système d'information pertinent.

5. Procédé d'appairage selon l'une quelconque des revendications 1 à 4, dans lequel le type de compteur intelligent est parmi un ensemble prédéfini de types candidats de compteurs intelligents incluant : compteur d'électricité, compteur d'eau, et compteur de gaz.

6. Produit programme d'ordinateur comportant des instructions pour exécuter le procédé d'appairage selon la revendication 1 ou 2, ou le procédé d'appairage selon la revendication 3 ou 4, lorsque les instructions sont exécutées par un processeur (301).

7. Support de stockage d'informations stockant des instructions pour exécuter le procédé d'appairage selon la revendication 1 ou 2, ou le procédé d'appairage selon la revendication 3 ou 4, lorsque les instructions sont lues depuis le support de stockage d'informations et exécutées par un processeur (301).

8. Passerelle multi-service (200) configurée pour appairer un compteur intelligent, dit compteur intelligent orphelin (201b), avec un système d'information, dit système d'information pertinent (110b), qui est destiné à gérer à distance un sous-ensemble de compteurs intelligents qui sont inscrits auprès dudit système d'information pertinent (110b), la passerelle multi-service (200) étant destinée à être utilisée dans un système de gestion automatisée (100) comportant une pluralité de systèmes d'information candidats (110a, 110b, 110c, 110d) partageant une même infrastructure réseau (101) pour gérer à distance des sous-ensembles respectifs de compteurs intelligents (201a, 201b, 201c, 202a, 202b, 202c, 203a, 203b), la passerelle multi-service (200) comportant de la circuiterie électronique configurée pour :
- recevoir une demande d'appairage en provenance du compteur intelligent orphelin (201b), qui inclut une information de type de compteur intelligent, en clair, et une information d'identifiant de compteur intelligent qui est sous forme chiffrée grâce à une première clef symétrique K_DSO connue du compteur intelligent orphelin (201b) et du système d'information pertinent (110b) ;
- trouver, parmi les systèmes d'information candidats (110a, 110b, 110c, 110d), ceux qui gèrent à distance des compteurs intelligents du même type que celui indiqué dans la demande d'appairage ;
- envoyer, grâce à un protocole sécurisé via l'infrastructure réseau (101), aux systèmes d'information candidats trouvés (110b, 110d), une demande relayée d'appairage qui inclut ladite information d'identifiant de compteur intelligent sous forme chiffrée telle que présentée dans la demande d'appairage reçue ;
- recevoir, grâce au protocole sécurisé via l'infrastructure réseau (101), en réponse à la demande relayée d'appairage, un acquittement positif incluant une information d'identifiant du système d'information pertinent sous forme chiffrée grâce à ladite première clef symétrique K_DSO, une deuxième clef symétrique K_WM spécifique au compteur intelligent orphelin (201b) en clair et la même deuxième clef symétrique K_WM sous forme chiffrée grâce à une troisième clef symétrique MK_DSO connue du compteur intelligent orphelin (201b) et du système d'information pertinent (110b) ;
- transmettre au compteur intelligent orphelin (201b) un message d'acceptation d'appairage, qui inclut l'information d'identifiant du système d'information pertinent sous forme chiffrée et la deuxième clef symétrique K_WM sous forme chiffrée, telles que présentées dans l'acquittement positif reçu ; et
- agir comme intermédiaire entre le compteur intelligent orphelin (201b) alors appairé et le système d'information pertinent (110b) lors d'échanges ultérieurs, en utilisant la clef symétrique K_WM pour communiquer avec le compteur intelligent orphelin (201b) alors appairé.

9. Compteur intelligent configuré pour appairer ledit compteur intelligent, dit compteur intelligent orphelin (201b), avec un système d'information, dit système d'information pertinent (110b), qui est destiné à gérer à distance un sous-ensemble de compteurs intelligents qui sont inscrits auprès dudit système d'information pertinent (110b), le compteur intelligent orphelin (201b) étant destiné à être utilisé dans un système de gestion automatisée (100) comportant une pluralité de systèmes d'information candidats (110a, 110b, 110c, 110d) partageant une même infrastructure réseau (101) pour gérer à distance des sous-ensembles respectifs de compteurs intelligents (201a, 201b, 201c, 202a, 202b, 202c, 203a, 203b), le compteur intelligent orphelin (201b) comportant de la circuiterie électronique configurée pour :
- transmettre, à une passerelle multi-service (200) destinée à agir comme relais entre le compteur intelligent orphelin (201b) et le système d'information pertinent (110b), une demande d'appairage qui inclut une information de type de compteur intelligent, en clair, et une information d'identifiant de compteur intelligent qui est sous forme chiffrée grâce à une première clef symétrique K_DSO connue du compteur intelligent orphelin (201b) et du système d'information pertinent (110b) ;
- recevoir, de la passerelle multi-service (200), un message d'acceptation d'appairage, qui inclut l'information d'identifiant du système d'information pertinent sous forme chiffrée grâce à la première clef symétrique K_DSO, ainsi qu'une deuxième clef symétrique K_WM spécifique au compteur intelligent orphelin (201b) sous forme chiffrée grâce à une troisième clef symétrique MK_DSO connue du compteur intelligent orphelin (201b) et du système d'information pertinent (110b) ; et
- utiliser la passerelle multi-service (200) comme intermédiaire entre le compteur intelligent orphelin (201b) alors appairé et le système d'information pertinent (110b) lors d'échanges ultérieurs, en utilisant la clef symétrique K_WM pour communiquer avec la passerelle multi-service (200) et la première clef symétrique K_DSO pour communiquer avec le système d'information pertinent (110b).

10. Système multi-service (150) comportant une passerelle multi-service (200) selon la revendication 8 et une pluralité de compteurs intelligents (201a, 201b, 201c, 202a, 202b, 202c, 203a, 203b) selon la revendication 9 répartis en sous-groupes (250a, 250b, 250c) qui correspondent chacun à des installations d'un même abonné.

## Patentansprüche

1. Paarungsverfahren zum Paaren eines intelligenten Zählers, verwaister intelligenter Zähler (201b) genannt, mit einem Informationssystem, relevantes Informationssystem (110b) genannt, das dazu bestimmt ist, aus der Ferne eine Teilmenge von intelligenten Zählern zu verwalten, die bei dem relevanten Informationssystem registriert sind, wobei das Paarungsverfahren von einem Multi-Service-Gateway (200) in einem automatisierten Verwaltungssystem (100) ausgeführt wird, das eine Vielzahl von Kandidaten-Informationssystemen (110a, 110b, 110c, 110d) umfasst, die eine gemeinsame Netzwerkinfrastruktur (101) teilen, um aus der Ferne jeweilige Teilmengen von intelligenten Zählern (201a, 201b, 201c, 202a, 202b, 202c, 203a, 203b) zu verwalten, wobei das Verfahren Folgendes umfasst:
- Empfangen einer Paarungsanforderung von dem verwaisten intelligenten Zähler, die eine Information zum Typ des intelligenten Zählers in Klarschrift beinhaltet, und einer Kennungsinformation des intelligenten Zählers, die dank einem ersten symmetrischen Schlüssel K_DSO, der dem verwaisten intelligenten Zähler (201b) und dem relevanten Informationssystem (110b) bekannt ist, verschlüsselte Form aufweist;
- Finden unter den Kandidaten-Informationssystemen (110a, 110b, 110c, 110d) derjenigen, die intelligente Zähler desselben Typs wie des in der Paarungsanforderung angegebenen aus der Ferne verwalten;
- Senden, dank einem gesicherten Protokoll über die Netzwerkinfrastruktur (101) an gefundene Kandidaten-Informationssysteme (110b, 110d) einer weitergeleiteten Paarungsanforderung, die die Kennungsinformation des intelligenten Zählers in verschlüsselter Form wie in der empfangenen Paarungsanforderung präsentiert beinhaltet;
- Empfangen dank dem gesicherten Protokoll über die Netzwerkinfrastruktur (101) als Reaktion auf die weitergeleitete Paarungsanforderung einer positiven Quittierung, die eine Kennungsinformation des relevanten Informationssystems, in, dank dem ersten symmetrischen Schlüssel K_DSO, verschlüsselter Form beinhaltet, eines zweiten symmetrischen Schlüssels K_WM, der für den verwaisten intelligenten Zähler (201b) spezifisch ist, in Klarschrift und desselben zweiten symmetrischen Schlüssels K_WM in, dank einem dritten symmetrischen Schlüssel MK_DSO, der dem verwaisten intelligenten Zähler (210b) und dem relevanten Informationssystem (1106) bekannt ist, verschlüsselter Form;
- Übertragen an den verwaisten intelligenten Zähler (201b) einer Paarungsannahmenachricht, die die Kennungsinformation des relevanten Informationssystems (110b) beinhaltet, in verschlüsselter Form und des zweiten symmetrischen Schlüssels K_WM in verschlüsselter Form, wie in der empfangenen positiven Quittierung präsentiert; und
- Agieren als Vermittler zwischen dem verwaisten intelligenten Zähler (201b), der nunmehr gepaart ist, und dem relevanten Informationssystem (110b) bei späteren Austauschen unter Verwendung des symmetrischen Schlüssels K_WM zum Kommunizieren mit dem nunmehr gepaarten verwaisten intelligenten Zähler (201b).

2. Paarungsverfahren nach Anspruch 1, das Folgendes umfasst:
- Empfangen als Reaktion auf die Paarungsannahmenachricht einer Paarungsbestätigungsnachricht, die dank dem zweiten symmetrischen Schlüssel K_WM verschlüsselt ist, der die Kennungsinformation des relevanten Informationssystems beinhaltet.

3. Paarungsverfahren zum Paaren eines intelligenten Zählers, verwaister intelligenter Zähler (201b) genannt, mit einem Informationssystem, relevantes Informationssystem (110b) genannt, das dazu bestimmt ist, aus der Ferne eine Teilmenge von intelligenten Zählern zu verwalten, die bei dem relevanten Informationssystem (110b) registriert sind, wobei das Paarungsverfahren von dem verwaisten intelligenten Zähler (201b) in einem automatisierten Verwaltungssystem (100) ausgeführt wird, das eine Vielzahl von Kandidaten-Informationssystemen (110a, 110b, 110c, 110d) umfasst, die eine gemeinsame Netzwerkinfrastruktur (101) teilen, um aus der Ferne jeweilige Teilmengen von intelligenten Zählern (201a, 201b, 201c, 202a, 202b, 202c, 203a, 203b) zu verwalten, wobei das Verfahren Folgendes umfasst:
- Übertragen an ein Multi-Service-Gateway (200), das dazu bestimmt ist, als Relais zwischen dem verwaisten intelligenten Zähler (201b) und dem relevanten Informationssystem (110b) zu dienen, einer Paarungsanforderung, die eine Information zum Typ des intelligenten Zählers in Klarschrift beinhaltet, und einer Kennungsinformation des intelligenten Zählers, die dank einem ersten symmetrischen Schlüssel K_DSO, der dem verwaisten intelligenten Zähler (201b) und dem relevanten Informationssystem (110b) bekannt ist, verschlüsselte Form aufweist;
- Empfangen von dem Multi-Service-Gateway (200) einer Paarungsannahmenachricht, die die Kennungsinformation des relevanten Informationssystem in, dank dem ersten symmetrischen Schlüssel K_DSO, verschlüsselter Form beinhaltet, sowie eines zweiten symmetrischen Schlüssels K_WM, der für den verwaisten intelligenten Zähler (201b) spezifisch ist, in, dank einem dritten symmetrischen Schlüssel MK_DSO, der dem verwaisten intelligenten Zähler (201b) und dem relevanten Informationssystem (110b) bekannt ist, verschlüsselter Form; und
- Verwenden des Multi-Service-Gateways als Vermittler zwischen dem nunmehr gepaarten verwaisten intelligenten Zähler und dem relevanten Informationssystem bei späteren Austauschen unter Verwendung des symmetrischen Schlüssels K_WM zum Kommunizieren mit dem Multi-Service-Gateway und des ersten symmetrischen Schlüssels K_DSO zum Kommunizieren mit dem relevanten Informationssystem (110b).

4. Paarungsverfahren nach Anspruch 3, das Folgendes umfasst:
- Übertragen als Reaktion auf die Paarungsannahmenachricht einer Paarungsbestätigungsnachricht, die dank dem zweiten symmetrischen Schlüssel K_WM verschlüsselt ist, die die Kennungsinformation des relevanten Informationssystems beinhaltet.

5. Paarungsverfahren nach einem der Ansprüche 1 bis 4, wobei der Typ von intelligentem Zähler einer aus einer vordefinierten Einheit von Kandidatentypen intelligenter Zähler ist, einschließlich: Stromzähler, Wasserzähler und Gaszähler.

6. Computerprogrammprodukt, das Anweisungen zum Ausführen des Paarungsverfahrens nach Anspruch 1 oder 2 oder des Paarungsverfahrens nach Anspruch 3 oder 4 umfasst, wenn die Anweisungen von einem Prozessor (301) ausgeführt werden.

7. Informationsspeichermedium, das Anweisungen zum Ausführen des Paarungsverfahrens nach Anspruch 1 oder 2 oder des Paarungsverfahrens nach Anspruch 3 oder 4 umfasst, wenn die Anweisungen aus dem Informationsspeichermedium gelesen und von einem Prozessor (301) ausgeführt werden.

8. Multi-Service-Gateway (200), das zum Paaren eines intelligenten Zählers, verwaister intelligenter Zähler (201b) genannt, mit einem Informationssystem, relevantes Informationssystem (110b) genannt, konfiguriert ist, das dazu bestimmt ist, aus der Ferne eine Teilmenge von intelligenten Zählern zu verwalten, die bei dem relevanten Informationssystem (110b) registriert sind, wobei das Multi-Service-Gateway (200) dazu bestimmt ist, in einem automatisierten Verwaltungssystem (100) verwendet zu werden, das eine Vielzahl von Kandidaten-Informationssystemen (110a, 110b, 110c, 110d) umfasst, die eine gemeinsame Netzwerkinfrastruktur (101) teilen, um aus der Ferne jeweilige Teilmengen von intelligenten Zählern (201a, 201b, 201c, 202a, 202b, 202c, 203a, 203b) zu verwalten, wobei das Multi-Service-Gateway (200) eine elektronische Schaltungsanordnung umfasst, die konfiguriert ist zum:
- Empfangen einer Paarungsanforderung von dem verwaisten intelligenten Zähler (201b), die eine Information zum Typ des intelligenten Zählers in Klarschrift beinhaltet, und einer Kennungsinformation des intelligenten Zählers, die dank einem ersten symmetrischen Schlüssels K_DSO, der dem verwaisten intelligenten Zähler (201b) und dem relevanten Informationssystem (110b) bekannt ist, verschlüsselte Form aufweist;
- Finden unter den Kandidaten-Informationssystemen (110a, 110b, 110c, 110d) derjenigen, die intelligente Zähler desselben Typs wie des in der Paarungsanforderung angegebenen aus der Ferne verwalten;
- Senden, dank einem gesicherten Protokoll über die Netzwerkinfrastruktur (101) an gefundene Kandidaten-Informationssysteme (110b, 110d) einer weitergeleiteten Paarungsanforderung, die die Kennungsinformation des intelligenten Zählers in verschlüsselter Form wie in der empfangenen Paarungsanforderung präsentiert beinhaltet;
- Empfangen dank dem gesicherten Protokoll über die Netzwerkinfrastruktur (101) als Reaktion auf die weitergeleitete Paarungsanforderung einer positiven Quittierung, die eine Kennungsinformation des relevanten Informationssystems dank dem ersten symmetrischen Schlüssel K_DSO in verschlüsselter Form beinhaltet, eines zweiten symmetrischen Schlüssels K_WM, der für den verwaisten intelligenten Zähler (201b) spezifisch ist, in Klarschrift und desselben zweiten symmetrischen Schlüssels K_WM in, dank einem dritten symmetrischen Schlüssel MK_DSO, der dem verwaisten intelligenten Zähler (201b) und dem relevanten Informationssystem (110b) bekannt ist, verschlüsselter Form;
- Übertragen an den verwaisten intelligenten Zähler (201b) einer Paarungsannahmenachricht, die die Kennungsinformation des relevanten Informationssystems beinhaltet, in verschlüsselter Form und des zweiten symmetrischen Schlüssels K_WM in verschlüsselter Form, wie in der empfangenen positiven Quittierung präsentiert; und
- Agieren als Vermittler zwischen dem verwaisten intelligenten Zähler (201b), der nunmehr gepaart ist, und dem relevanten Informationssystem (110b) bei späteren Austauschen unter Verwendung des symmetrischen Schlüssels K_WM zum Kommunizieren mit dem nunmehr gepaarten verwaisten intelligenten Zähler (201b).

9. Intelligenter Zähler, der zum Paaren des intelligenten Zählers, verwaister intelligenter Zähler (201b) genannt, konfiguriert ist, mit einem Informationssystem, relevantes Informationssystem (110b) genannt, das dazu bestimmt ist, aus der Ferne eine Teilmenge von intelligenten Zählern zu verwalten, die bei dem relevanten Informationssystem (110b) registriert sind, wobei der verwaiste intelligente Zähler (201b) dazu bestimmt ist, in einem automatisierten Verwaltungssystem (100) verwendet zu werden, das eine Vielzahl von Kandidaten-Informationssystemen (110a, 110b, 110c, 110d) umfasst, die eine gemeinsame Netzwerkinfrastruktur (101) teilen, um aus der Ferne jeweilige Teilmengen von intelligenten Zählern (201a, 201b, 201c, 202a, 202b, 202c, 203a, 203b) zu verwalten, wobei der verwaiste intelligente Zähler (201b) eine elektronische Schaltungsanordnung umfasst, die konfiguriert ist zum:
- Übertragen an ein Multi-Service-Gateway (200), das dazu bestimmt ist, als Relais zwischen dem verwaisten intelligenten Zähler (201b) und dem relevanten Informationssystem (110b) zu dienen, einer Paarungsanforderung, die eine Information zum Typ des intelligenten Zählers in Klarschrift beinhaltet, und einer Kennungsinformation des intelligenten Zählers, die dank einem ersten symmetrischen Schlüssel K_DSO, der dem verwaisten intelligenten Zähler (201b) und dem relevanten Informationssystem (110b) bekannt ist, verschlüsselte Form aufweist;
- Empfangen von dem Multi-Service-Gateway (200) einer Paarungsannahmenachricht, die die Kennungsinformation des relevanten Informationssystem in, dank dem ersten symmetrischen Schlüssel K_DSO, verschlüsselter Form beinhaltet, sowie eines zweiten symmetrischen Schlüssels K_WM, der für den verwaisten intelligenten Zähler (201b) spezifisch ist, in, dank einem dritten symmetrischen Schlüssel MK_DSO, der dem verwaisten intelligenten Zähler (201b) und dem relevanten Informationssystem (110b) bekannt ist, verschlüsselter Form; und
- Verwenden des Multi-Service-Gateways (200) als Vermittler zwischen dem nunmehr gepaarten verwaisten intelligenten Zähler (201b) und dem relevanten Informationssystem (110b) bei späteren Austauschen unter Verwendung des symmetrischen Schlüssels K_WM zum Kommunizieren mit dem Multi-Service-Gateway (200) des ersten symmetrischen Schlüssels K_DSO zum Kommunizieren mit dem relevanten Informationssystem (110b).

10. Multi-Service-System (150), das ein Multi-Service-Gateway (200) nach Anspruch 8 und eine Vielzahl intelligenter Zähler (201a, 201b, 201c, 202a, 202b, 202c, 203a, 203b) nach Anspruch 9 umfasst, die in Teilgruppen (250a, 250b, 250c) verteilt sind, die jeweils Anlagen desselben Abonnenten entsprechen.

## Claims

1. Pairing method for pairing a smart meter, referred to as an orphan smart meter (201b), with an information system, referred to as the relevant information system (110b), which is intended to remotely manage a subset of smart meters that are registered with said relevant information system, the pairing method being implemented by a multi-utility gateway (200) in an automated-management system (100) comprising a plurality of candidate information systems (110a, 110b, 110c, 110d) sharing one and the same network infrastructure (101) for remotely managing respective subsets of smart meters (201a, 201b, 201c, 202a, 202b, 202c, 203a, 203b), the method comprising:
- receiving a pairing request coming from the orphan smart meter, which includes information on the type of smart meter, in clear, and smart-meter identifier information that is in a form encrypted by means of a first symmetric key K_DSO known to the orphan smart meter (201b) and to the relevant information system (110b);
- finding, among the candidate information systems (110a, 110b, 110c, 110d), those that remotely manage smart meters of the same type as the one indicated in the pairing request;
- sending, by means of a secure protocol via the network infrastructure (101), to the candidate information systems found (110b, 110d), a relayed pairing request that includes said smart-meter identifier information in encrypted form as presented in the pairing request received;
- receiving, by means of the secure protocol via the network infrastructure (101), in response to the relayed pairing request, a positive acknowledgement including identifier information on the relevant information system in a form encrypted by means of said first symmetric key K_DSO, a second symmetric key K_WM specific to the orphan smart meter (201b) in clear and the same second symmetric key K_WM in a form encrypted by means of a third symmetric key MK_DSO known to the orphan smart meter (210b) and to the relevant information system (110b);
- transmitting to the orphan smart meter (201b) a pairing-acceptance message that includes the identifier information on the relevant information system (110b) in encrypted form and the second symmetric key K_WM in encrypted form, as presented in the positive acknowledgement received; and
- acting as intermediary between the orphan smart meter (201b) then paired and the relevant information system (110b) during subsequent exchanges, using the symmetric key K_WM for communicating with the orphan smart meter (201b) then paired.

2. Pairing method according to claim 1, comprising:
- receiving, in response to the pairing-acceptance message, a pairing-confirmation message, encrypted by means of the second symmetric key K_WM, which includes the identifier information on the relevant information system.

3. Pairing method for pairing a smart meter, referred to as an orphan smart meter (201b), with an information system, referred to as the relevant information system (110b), which is intended to remotely manage a subset of smart meters that are registered with said relevant information system (110b), the pairing method being implemented by the orphan smart meter (201b) in an automated-management system (100) comprising a plurality of candidate information systems (110a, 110b, 110c, 110d) sharing one and the same network infrastructure (101) for remotely managing respective subsets of smart meters (201a, 201b, 201c, 202a, 202b, 202c, 203a, 203b), the method comprising:
- transmitting, to a multi-utility gateway (200) intended to act as relay between the orphan smart meter (201b) and the relevant information system (110b), a pairing request that includes information on the type of smart meter, in clear, and smart-meter identifier information that is in a form encrypted by means of a first symmetric key K_DSO known to the orphan smart meter (201b) and to the relevant information system (110b);
- receiving, from the multi-utility gateway (200), a pairing-acceptance message that includes the identifier information on the relevant information system in a form encrypted by means of the first symmetric key K_DSO, as well as a second symmetric key K_WM specific to the orphan smart meter (201b) in a form encrypted by means of a third symmetric key MK_DSO known to the orphan smart meter (201b) and to the relevant information system (110b); and
- using the multi-utility gateway as intermediary between the orphan smart meter then paired and the relevant information system during subsequent exchanges, using the symmetric key K_WM for communicating with the multi-utility gateway and the first symmetric key K_DSO for communicating with the relevant information system (110b).

4. Pairing method according to claim 3, comprising:
- transmitting, in response to the pairing-acceptance message, a pairing-confirmation message, encrypted by means of the second symmetric key K_WM, which includes the identifier information on the relevant information system.

5. Pairing method according to any one of claims 1 to 4, wherein the type of smart meter is among a predefined set of candidate types of smart meter including: electricity meter, water meter and gas meter.

6. Computer program product comprising instructions for implementing the pairing method according to claim 1 or 2, or the pairing method according to claim 3 or 4, when the instructions are executed by a processor (301).

7. Information storage medium storing instructions for implementing the pairing method according to claim 1 or 2, or the pairing method according to claim 3 or 4, when the instructions are read from the information storage medium and are executed by a processor (301).

8. Multi-utility gateway (200), configured to pair a smart meter, referred to as an orphan smart meter (201b), with an information system, referred to as the relevant information system (110b), which is intended to remotely manage a subset of smart meters that are registered with said relevant information system (110b), the multi-utility gateway (200) being intended to be used in an automated-management system (100) comprising a plurality of candidate information systems (110a, 110b, 110c, 110d) sharing one and the same network infrastructure (101) for remotely managing respective subsets of smart meters (201a, 201b, 201c, 202a, 202b, 202c, 203a, 203b), the multi-utility gateway (200) comprising electronic circuitry configured to:
- receive a pairing request coming from the orphan smart meter (201b), which includes information on the type of smart meter, in clear, and smart-meter identifier information that is in a form encrypted by means of a first symmetric key K_DSO known to the orphan smart meter (201b) and to the relevant information system (110b);
- find, among the candidate information systems (110a, 110b, 110c, 110d), those that remotely manage smart meters of the same type as the one indicated in the pairing request;
- send, by means of a secure protocol via the network infrastructure (101), to the candidate information systems found (110b, 110d), a relayed pairing request that includes said smart-meter identifier information in encrypted form as presented in the pairing request received;
- receive, by means of the secure protocol via the network infrastructure (101), in response to the relayed pairing request, a positive acknowledgement including identifier information on the relevant information system in a form encrypted by means of said first symmetric key K_DSO, a second symmetric key K_WM specific to the orphan smart meter (201b) in clear and the same second symmetric key K_WM in a form encrypted by means of a third symmetric key MK_DSO known to the orphan smart meter (201b) and to the relevant information system (110b);
- transmit to the orphan smart meter (201b) a pairing-acceptance message that includes the identifier information on the relevant information system in encrypted form and the second symmetric key K_WM in encrypted form, as presented in the positive acknowledgement received; and
- act as intermediary between the orphan smart meter (201b) then paired and the relevant information system (110b) during subsequent exchanges, using the symmetric key K_WM for communicating with the orphan smart meter (201b) then paired.

9. Smart meter configured to pair said smart meter, referred to as an orphan smart meter (201b), with an information system, referred to as the relevant information system (110b), which is intended to remotely manage a subset of smart meters that are registered with said relevant information system (110b), the orphan smart meter (201b) being intended to be used in an automated-management system (100) comprising a plurality of candidate information systems (110a, 110b, 110c, 110d) sharing one and the same network infrastructure (101) for remotely managing respective subsets of smart meters (201a, 201b, 201c, 202a, 202b, 202c, 203a, 203b), the orphan smart meter (201b) comprising electronic circuitry configured to:
- transmit, to a multi-utility gateway (200) intended to act as relay between the orphan smart meter (201b) and the relevant information system (110b), a pairing request that includes information on the type of smart meter, in clear, and smart-meter identifier information that is in a form encrypted by means of a first symmetric key K_DSO known to the orphan smart meter (201b) and to the relevant information system (110b);
- receive, from the multi-utility gateway (200), a pairing-acceptance message that includes the identifier information on the relevant information system in a form encrypted by means of the first symmetric key K_DSO, as well as a second symmetric key K_WM specific to the orphan smart meter (201b) in a form encrypted by means of a third symmetric key MK_DSO known to the orphan smart meter (201b) and to the relevant information system (110b); and
- use the multi-utility gateway (200) as intermediary between the orphan smart meter (201b) then paired and the relevant information system (110b) during subsequent exchanges, using the symmetric key K_WM for communicating with the multi-utility gateway (200) and the first symmetric key K_DSO for communicating with the relevant information system (110b).

10. Multi-utility system (150) comprising a multi-utility gateway (200) according to claim 8 and a plurality of smart meters (201a, 201b, 201c, 202a, 202b, 202c, 203a, 203b) according to claim 9 distributed in subgroups (250a, 250b, 250c) that each correspond to installations of one and the same subscriber.
